# EUROPÄISCHE PATENTSCHRIFT

(11) **EP 2 105 716 B1**
(45) Veröffentlichungstag und Bekanntmachung des Hinweises auf die Patenterteilung: **28.12.2016**
(21) Anmeldenummer: 08005928.0
(22) Anmeldetag: 28.03.2008
(51) Int. Cl.: G01L 19/14, G01F 15/14, G01D 11/24, G01F 23/00

(54) **Schutzhaube mit einem Gehäuse zum Schützen eines Messgerätes und Verfahren zum Montieren einer Schutzhaube**
Protective casing with a housing for protecting a measuring device and method of mouting a protective casing
Capot de protection doté d'un boîtier destiné à la protection d'un appareil de mesure et procédé de montage d'un capot de protection

(43) Veröffentlichungstag der Anmeldung: 30.09.2009
(73) Patentinhaber: VEGA Grieshaber KG, 77709 Wolfach (DE)
(72) Erfinder: Kopp, Thomas, 77709 Wolfach (DE)
(74) Vertreter: Westphal, Mussgnug & Partner Patentanwälte mbB

(56) Entgegenhaltungen:
- DE-A1- 4 442 944
- DE-U1- 29 612 454
- US-A1- 2007 295 728

## Beschreibung

Die Erfindung bezieht sich auf eine Schutzhaube mit einem Gehäuse zum Schützen eines Messgerätes und ein Verfahren zum Montieren einer Schutzhaube.

Übliche Messgeräte, insbesondere Füllstands- und Druckmessgeräte zum Einsatz an Behältnissen sind aus mehreren Komponenten aufgebaut. Ein erster Messgeräteabschnitt davon weist elektronische Komponenten und/oder Anschlusselemente zum Anschluss an externe Vorrichtungen auf. Der erste Messgeräteabschnitt ist üblicherweise außerhalb des Behältnisses angeordnet, dessen Innenraum hinsichtlich eines Drucks oder Füllstands zu überwachen ist. Vom ersten Messgeräteabschnitt führt ein zweiter Messgeräteabschnitt zu einem Sensorabschnitt, in welchem entsprechend ausgestaltete Sensorelemente aufgenommen sind. Der zweite Messgeräteabschnitt ist üblicherweise mit einem geringeren Umfang als der erste Messgeräteabschnitt ausgebildet und weist oftmals die Form eines zylindrischen Rohrs auf, welches durch eine entsprechende Öffnung des zu überwachenden Behältnisses geführt werden kann. Oftmals ragt vom ersten Messgeräteabschnitt in seitlicher Richtung, das heißt senkrecht zur Richtung des zweiten Messgeräteabschnitts, ein Anschlussabschnitt weg, durch welchen Anschlusselemente, insbesondere Kabel, nach außen geführt werden.

Der erste Messgeräteabschnitt und der Anschlussabschnitt sind dabei gegebenenfalls von einem einteiligen Gehäuse umgeben, welches einen gewissen Schutz der innenliegenden Komponenten vor Umgebungseinflüssen bietet. Jedoch bestehen Probleme in Umgebungen mit besonders extremen Einflüssen, wie beispielsweise aggressiven Substanzen, starkem Niederschlag, insbesondere Hagel, oder starker Sonneneinstrahlung.

Für einen zusätzlichen Schutz derartiger Messgeräte sind Schutzhauben allgemein bekannt, welche spezifisch auf eine entsprechende Gehäusebauform des Messgerätes, das heißt insbesondere auf die Form des ersten Messgeräteabschnitts und gegebenenfalls eines daran anschließenden Anschlussabschnitts abgestimmt sind. Die DE 44 42 944 A1 offenbart einen Schutzkasten zur Anbringung und Halterung an einer Messgeräteinstallation. Eine Schutzhaube ist in der US 2007/0295728 A1 offenbart.

Nachteilhaft an diesen Schutzhauben ist, dass sie keine Verwendung für verschiedene Gehäusebauformen ermöglichen. Die Befestigungen zur Befestigung der Schutzhauben an den entsprechend zugeordneten Messgeräten sind so gestaltet, dass es nicht möglich ist, die Schutzhaube für verschiedene Gehäuseabmessungen und somit auch für andere Messgeräte zu verwenden.

Die Aufgabe der Erfindung besteht darin, eine Schutzhaube so weiterzuentwickeln, dass mit möglichst wenigen Einzelteilen eine Schutzfunktion vor Imissionen von oben und gegebenenfalls von der Seite erreicht wird. Vorzugsweise soll im Innenraum entstehende Wärme, die durch Abstrahlung von Komponenten des Messgerätes oder Wärmeentwicklung durch Sonnenlicht entsteht, entweichen können.

Diese Aufgabe wird durch die eine Schutzhaube mit einem Gehäuse zum Schützen eines Messgerätes mit den Merkmalen des Patentanspruchs 1 bzw. ein Verfahren zum Montieren einer solchen Schutzhaube mit den Merkmalen des Patentanspruchs 9 gelöst. Vorteilhafte Ausgestaltungen sind Gegenstand von abhängigen Ansprüchen.

Bevorzugt wird demgemäß eine Schutzhaube mit einem Gehäuse zum Schützen eines Messgerätes. Das Gehäuse weist dabei einen Aufnahmeraum zum Aufnehmen eines ersten Messgeräteabschnitts eines solchen Messgerätes und eine Durchführungsöffnung zum Hindurchführen eines mit dem ersten Messgeräteabschnitt verbundenen zweiten Messgeräteabschnitts auf. Vorteilhaft wird die Anordnung dadurch, dass zumindest ein untergreifendes Stützelement in den Aufnahmeraum hineinragt zum teilweisen Untergreifen des ersten Messgeräteabschnitts in Richtung der Durchführungsöffnung und dass das Gehäuse aus zumindest einem ersten und einem zweiten Gehäuseabschnitt und zumindest einem Kopplungselement ausgebildet ist, wobei der erste Messgeräteabschnitt zwischen den Gehäuseabschnitten einsetzbar ist und diese nachfolgend zum Ausbilden und Verschließen oder Verriegeln des Aufnahmeraums zueinander verstellbar ausgestaltet sind.

Eine derartige Anordnung einer insbesondere zweiteiligen Schutzhaube mit einem ersten und einem zweiten Gehäuseabschnitt, welche nach dem Einsetzen des ersten Messgeräteabschnitts und gegebenenfalls eines Anschlussabschnitts zusammengefügt werden können, ermöglicht eine einfache Montage der Schutzhaube am Messgerät. Durch das Vorsehen von einem oder mehreren untergreifenden Stützelementen kann ein entsprechender Vorsprung des ersten Messgeräteabschnitts relativ zum zweiten Messgeräteabschnitt auf solche untergreifende Stützelemente aufgesetzt werden, so dass die Durchführungsöffnung variabel gestaltet werden kann und nicht zwingend zugleich selber zum Untergreifen des ersten Messgeräteabschnitts dimensioniert und geformt sein muss, um ein Herausrutschen des ersten Messgeräteabschnitts durch die Durchführungsöffnung bzw. ein Abheben der Schutzhaube zu verhindern. Zur Montage braucht lediglich der erste Messgeräteabschnitt auf solche Stützelemente in einem der Gehäuseabschnitte aufgesetzt werden, um nachfolgend den anderen der Gehäuseabschnitte an dem ersten Gehäuseabschnitt anzusetzen und daran festzulegen.

Bevorzugt ist zumindest ein solches Kopplungselement als ein den ersten und den zweiten Gehäuseabschnitt gelenkig miteinander verbindendes Gelenk ausgebildet. Durch eine solche Ausgestaltung muss nicht eine Vielzahl einzelner Komponenten bereitgehalten werden, sondern es ist im Wesentlichen nur eine einzelne Komponente mitzuführen, um diese als Schutzhaube an einem Messgerät zu befestigen. Ein Gelenk bildet bereits eine erste Form eines Kopplungselements, so dass die beiden Gehäuseabschnitte nach dem Schließen lediglich durch ein einfaches weiteres Kopplungselement zu verbinden sind, um zusammen zu bleiben und den ersten Messgeräteabschnitt sicher im Aufnahmeraum einzuschließen.

In vorzugsweise zumindest einer seitlichen Umfangswandung des ersten und/oder des zweiten Gehäuseabschnitts kann eine unterseitig offene Anschlussöffnung zum Durchführen von elektrisch leitfähigen Anschlusselementen des Messgeräts ausgebildet sein, wobei die Anschlussöffnung unter einem Winkel in einer Ebene senkrecht zu einer Verschwenkungsachse des Gelenks geöffnet angeordnet ist. Dies ermöglicht auch ein Zusammensetzen von zwei Gehäuseabschnitten um ein Messgerät herum, bei dem vom ersten Messgeräteabschnitt in seitlicher Richtung ein Anschlussabschnitt absteht oder bei dem vom ersten Messgeräteabschnitt in seitlicher Richtung Anschlusskabel weggeführt sind. Dies wird insbesondere dadurch möglich, dass die Anschlussöffnung unterseitig, das heißt aus Sicht der Komponenten der Schutzhaube in gleicher Richtung wie die Durchführungsöffnung in Art einer Einbuchtung der Seitenwand offen ist, so dass die Anschlussöffnung einfach über heraustretende Komponenten wie einen Anschlussabschnitt oder Kabel übergeschwenkt werden kann.

Zumindest ein solches Kopplungselement kann als ein Rastelementpaar ausgebildet sein zum Arretieren des ersten und des zweiten Gehäuseabschnitts aneinander in einer den ersten Messgeräteabschnitt umschließenden Anordnung, so dass der erste Messgeräteabschnitt ohne weitere Befestigungskomponenten fest in dem zusammengesetzten Gehäuse aufgenommen werden kann. Prinzipiell können jedoch auch andere Kopplungselemente eingesetzt werden, gegebenenfalls sogar lediglich ein Draht, Gummi oder Band, welche den unterseitigen Bereich der seitlichen Umfangswandung umschlingen und so die beiden Gehäuseabschnitte fest miteinander verbinden.

Zumindest ein solches untergreifendes Stützelement ist derart elastisch ausgebildet, dass der aufgenommene erste Messgeräteabschnitt in Richtung einer der Durchführungsöffnung gegenüberliegenden oberseitigen Wandung und/oder in Richtung oder Gegenrichtung einer Montagebewegung elastisch gespannt wird. Eine solche Elastizität in entgegengesetzter Richtung zur Durchführungsöffnung bietet den Vorteil, dass der erste Messgeräteabschnitt zwischen solchen Stützelementen und einer gegenüberliegenden oberseitigen Wandung elastisch eingespannt werden kann und somit in dieser Richtung eine nachträgliche Bewegung der Schutzhaube verhindert oder abgesehen von elastischen Schwingungen unterdrückt wird. Außerdem können im Rahmen der Toleranzen der Bewegbarkeit der untergreifenden Stützelemente in dieser Richtung auch unterschiedlich hohe Messgeräteabschnitte in dem Aufnahmeraum elastisch eingespannt eingesetzt werden. Eine Elastizität der untergreifenden Stützelemente in einer dazu seitlichen Richtung, das heißt in einer Ebene quer zur Längsrichtung der Durchführungsöffnung, bietet Vorteile beim Zusammensetzen der Gehäuseabschnitte, so dass ebenfalls Messgeräteabschnitte mit unterschiedlichen Dimensionen auf einfache Art und Weise aufgenommen werden können.

Die Durchführungsöffnung ist größer als der aufgenommene erste Messgeräteabschnitt und das zumindest eine derart untergreifende Stützelement ist dabei derart dimensioniert, dass der erste Messgeräteabschnitt in Richtung der Durchführungsöffnung gegen ein Heraustreten aus der Durchführungsöffnung gesperrt ist und trotzdem der zweite Messgeräteabschnitt durch die Durchführungsöffnung hindurchtreten kann. Dies ermöglicht einen universellen Einsatz, da auch Messgeräte mit unterschiedlich breiten zweiten Messgeräteabschnitten mittels einer solchen Schutzhaube geschützt werden können. Oft reicht nämlich ein Schutz gegen Staub, Schmutz und Niederschlag, welche von oben kommen aus, um den ersten Messgeräteabschnitt mit elektronischen Komponenten und/oder Kabelanschlüssen ausreichend zu schützen. Dies gilt insbesondere dann, wenn der erste Messgeräteabschnitt selber eigentlich schon eine geschlossene Einheit ausbildet und gegebenenfalls lediglich gegen massive Störungen durch Schmutz, Hagelkörner oder einwirkende Sonneneinstrahlung zu schützen ist.

Zumindest ein elastisches Ausrichteelement ragt von zumindest einer seitlichen Umfangswandung des ersten und/oder des zweiten Gehäuseabschnitts und/oder von der bzw. einer der Durchführungsöffnung gegenüberliegenden oberseitigen Wandung in den Aufnahmeraum hinein zum elastischen Einspannen des aufgenommenen ersten Messgeräteabschnitts in dem Aufnahmeraum. Elastische Ausrichteelemente sind besonders vorteilhaft, um die Schutzhaube bzw. das Gehäuse relativ zu dem aufgenommenen Messgeräteabschnitt in eine feste Position zu bringen und ein Wackeln zu verhindern. Außerdem wird durch solche Ausrichteelemente eine Beabstandung zwischen außenseitigen Wandungen des ersten Messgeräteabschnitts und einer Innenseite des Gehäuses belassen, welche zur Ermöglichung einer Luftströmung und somit Abführung von Wärme ausgestaltet werden können.

Vorteilhafterweise werden solche elastischen Ausrichteelemente so vorgesehen, dass der erste Messgeräteabschnitt und gegebenenfalls auch ein daran angesetzter Anschlussabschnitt von vorzugsweise allen Richtungen an zumindest einem solchen elastischen Ausrichteelement anliegen. Prinzipiell möglich ist jedoch auch eine Ausgestaltung, bei welcher lediglich ein einzelnes elastisches Ausrichteelement vorgesehen ist, welches den aufgenommenen ersten Messgeräteabschnitt gegen eine gegenüberliegende starre Gehäusewandung des Gehäuses drückt und so elastisch innerhalb des Gehäuses in eine vorgegebene Position drückt. In jedem Fall wird unabhängig von der Dimension und Formgebung des ersten Messgeräteabschnitts eine stabile Lagerung von Schutzhaube und Messgerät relativ zueinander ermöglicht. Beim Einsatz im Außenbereich wird somit z. B. auch ein klapperndes Geräusch bei Wind vermieden.

Bevorzugt sind in der bzw. einer seitlichen Umfangswandung des ersten und/oder des zweiten Gehäuseabschnitts zurückspringende Wandungsabschnitte ausgebildet, wobei die seitliche Umfangswandung im Montagezustand bei Betrieb des Messgerätes die bzw. eine der Durchführungsöffnung gegenüberliegende oberseitige Wandung in Richtung der unterseitigen Durchgangsöffnung verbindet. Eine solche Wandstrukturierung der seitlichen Umfangswandung bildet Kanäle aus, durch welche erwärmte Luft wegtransportiert werden kann. Besonders bevorzugt ist dabei eine wellenförmige Wandung, welche aus wellenförmigen und ineinander übergehenden zurückspringenden und vorspringenden Wandungsabschnitten besteht und neben der Ausbildung von Luftleitkanälen zugleich eine erhöhte Wandungsstabilität bietet.

In zumindest einem solchen aus außenseitiger Sicht in den Aufnahmeraum hinein zurückspringenden Wandungsabschnitt kann eine Lüftungsöffnung zum Belüften des Aufnahmeraums ausgebildet sein. Sofern ein Eindringen von übermäßigem Schmutz, Wasser oder sonstigen Immissionen durch seitliche Öffnungen aufgrund der Anordnung ausgeschlossen werden kann oder nur in vernachlässigbarem Maße erfolgt, werden solche seitlichen Lüftungsöffnungen vorzugsweise vorgesehen, um Wärme aus dem Innenraum des Aufnahmegehäuses nach außen abführen zu können.

Verfahrensgemäß wird zum Montieren einer Schutzhaube um einen ersten Messgeräteabschnitt eines Messgeräts, insbesondere zum Montieren einer derart bevorzugt ausgestalteten Schutzhaube, bevorzugt, wenn in einen Aufnahmeraum eines Gehäuses der Schutzhaube ein erster Messgeräteabschnitt eines solchen Messgerätes derart eingesetzt wird, dass ein zweiter Messgeräteabschnitt durch eine Durchführungsöffnung aus dem Gehäuse herausführt, wobei der erste Messgeräteabschnitt auf zumindest ein in den Aufnahmeraum hineinragendes und den ersten Messgeräteabschnitt untergreifendes Stützelement gesetzt wird und nachfolgend zumindest ein zweiter Gehäuseabschnitt derart gegen den ersten Messgeräteabschnitt gesetzt und an dem ersten Gehäuseabschnitt arretiert wird, dass von diesen der Aufnahmeraum mit dem eingesetzten ersten Messgeräteabschnitt umschlossen wird.

Dabei wird, falls zumindest ein elastisches Ausrichteelement von zumindest einer seitlichen Umfangswandung des ersten und/oder des zweiten Gehäuseabschnitts und/oder von der bzw. einer der Durchführungsöffnung gegenüberliegenden oberseitigen Wandung in den Aufnahmeraum hineinragt, das zumindest eine elastische Ausrichteelement elastisch gegen den ersten Messgeräteabschnitt gespannt beim Setzen des zweiten Gehäuseabschnitts an den ersten Gehäuseabschnitt zum elastischen Einspannen des aufgenommenen ersten Messgeräteabschnitts in dem Aufnahmeraum.

Die untergreifenden Stützelemente und Ausrichteelemente können vorteilhaft an der Innenseite der seitlichen Wandung von deren unterm Rand nach oben versetzt beabstandet angeordnet sein, so dass auch von unten her ein gewünschter Abstand vor eindringendem Schmutz oder Wasser gewährleistet ist.

Somit können Schutzhauben konstruiert werden, welche mit wenig Einzelteilen eine Schutzfunktion vor Immissionen von oben und von der Seite erreichen und welche so gestaltet sind, dass im Innenraum entstehende Wärme durch Abstrahlung des Messgerätes oder durch Wärmeentwicklung durch Sonnenlicht entweichen kann. Durch Feder- bzw. Zentrierlaschen, welche als untergreifende Stützelemente und Ausrichteelemente in den vorzugsweise halbschalenförmigen Gehäuseabschnitten ausgebildet sind, können derartige Schutzhauben an Sensorgehäusen mit verschiedenen Verbindungsdurchmessern und Dimensionierungen befestigt werden. Zurückgesetzte Lüftungsschlitze in Form der Lüftungsöffnungen erlauben einen Abzug der erwärmten Luft ohne dass Verschmutzungen von oben direkt eindringen können. Im Fall einer insbesondere zweiteiligen Schutzhaube in Klappausführung um das Gelenk wird ein Schutz gegen Abheben der Haube durch sich am Messgerätehals bzw. am zweiten Messgeräteabschnitt abstützende federnde Laschen in Form der in seitlicher Richtung elastischen Stützelemente erreicht. Ein Schutz gegen Eindringen durch Verunreinigung von oben kann insbesondere durch Hinterschnitte in einer der Haubenhälften erreicht werden. Einsetzbar sind derartige Schutzhauben insbesondere für ein Kammergehäuse von Messgeräten, welche aus Kunststoff, Edelstahl oder Aluminium gefertigt sind. Die Schutzhauben selber werden bevorzugt aus Kunststoff gefertigt, insbesondere spritz-gegossen, können jedoch auch aus anderen oder kombinierten verschiedenartigen Materialien gefertigt werden.

Ein Ausführungsbeispiel wird nachfolgend anhand der Zeichnung zweier Ausführungsformen näher erläutert. Es zeigen:
- Fig. 1: eine bevorzugte Schutzhaube in perspektivischer Ansicht von schräg unten,
- Fig. 2A: eine solche Schutzhaube in Seitenansicht,
- Fig. 2B: diese Schutzhaube in geschnittener Ansicht mit gepunktet dargestellt einem aufgenommenen Messgerät und
- Fig. 3: eine alternative Ausgestaltung einer derartigen Schutzhaube in Seitenansicht.

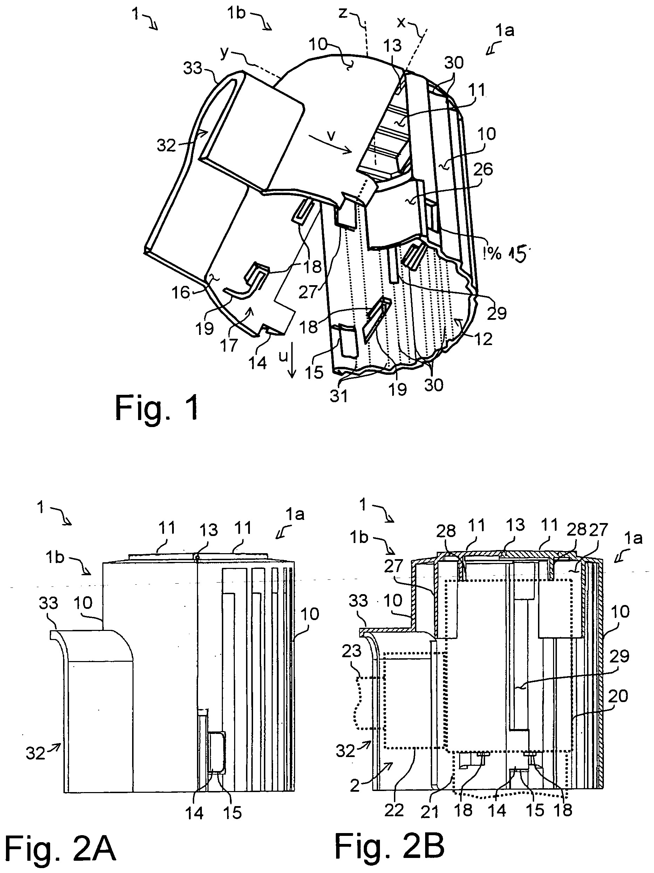

Wie aus Fig. 1, 2A und 2B ersichtlich, besteht eine besonders bevorzugte Schutzhaube mit einem Gehäuse 1 zum Schützen eines Messgerätes 2 vorzugsweise aus einem ersten Gehäuseabschnitt 1a und einem zweiten Gehäuseabschnitt 1b, welche durch Kopplungselemente miteinander verbunden bzw. koppelbar sind. In montierter Form besteht das Gehäuse 1 im Wesentlichen aus einer seitlichen Umfangswandung 10 und einer oberseitigen Wandung 11 sowie einer der oberseitigen Wandung 11 gegenüberliegenden unterseitigen bzw. bodenseitigen Durchführungsöffnung 12. Das Gehäuse 1 hat also im Wesentlichen die Form eines auf den Kopf gestellten Eimers. Die Unterteilung in die beiden Gehäuseabschnitte 1a, 1b erfolgt bevorzugt so, dass achsparallel zu einer Längsachse z, welche senkrecht durch die Durchführungsöffnung 12 und die oberseitige Wandung 11 führt, eine Halbierung des Gehäuses 1 vorgenommen ist. Dadurch werden zwei sich über im Wesentlichen einen Halbkreis erstreckende seitliche Umfangswandungen 10 mit jeweils einer über eine Halbkreisfläche geschlossenen oberen Wandung 11 ausgebildet.

Die beiden Gehäuseabschnitte 1a, 1b sind gemäß einer besonders bevorzugten Ausführungsform über eine Gelenkanordnung mit zumindest einem Gelenk 13 als einem ersten Kopplungselement gelenkig um eine Verschwenkungsachse x verbunden. Die Verschwenkungsachse x bzw. das Gelenk 13 verbindet die beiden aneinander anliegenden Kanten der beiden oberseitigen Wandungen 11 miteinander, so dass die beiden Gehäuseabschnitte 1a, 1b relativ zueinander um die Verschwenkungsachse x auf- bzw. zugeklappt werden können.

Zur Kopplung bzw. Arretierung der beiden Gehäuseabschnitte 1a, 1b in dem geschlossenen Zustand des Gehäuses 1 sind an diesen vorzugsweise weitere Kopplungselemente 14, 15 vorgesehen. Diese weiteren Kopplungselemente werden besonders bevorzugt durch ein Rastelementpaar oder mehrere Rastelementpaare ausgebildet. Wie dargestellt, bestehen bevorzugte Rastelementpaare aus jeweils einem Rastelement 14 und einer Rastausnehmung 15, welche zum Einrasten des Rastelements 14 ausgebildet ist. Die Rastelementausnehmung 15 ist dabei als Vertiefung oder Durchgangsöffnung in der seitlichen Umfangswandung 10 in vorzugsweise einem Abschnitt nahe der unterseitigen Durchgangsöffnung und benachbart zur im geschlossenen Zustand gegenüberliegenden anliegenden Kante der seitlichen Umfangswandung 10 des anderen der Gehäuseabschnitte 1a ausgebildet. Entsprechend ist an der gegenüberliegenden seitlichen Umfangswandung 10 des anderen Gehäuseabschnitts 1b das mit der Rastausnehmung 15 korrespondierende Rastelement 14 so ausgebildet, dass es von der Kante der seitlichen Umfangswand 10 in seitlicher Richtung vorsteht und benachbart zur außenseitigen oder innenseitigen Fläche der seitlichen Umfangswandung 10 des anderen Gehäuseabschnitts 1a bis über die Rastausnehmung 15 führbar ist, um in dieser einzurasten. Durch ein Verschwenken des vorzugsweise zweiten Gehäuseabschnitts 1b um die Verschwenkungsachse x in einer Verschwenkungsrichtung v werden somit die Rastelemente 14 über die Rastausnehmungen 15 geführt, um in diesen einzurasten.

Von den Innenseiten der beiden seitlichen Umfangswandungen 10 wird im zusammengesetzten Zustand des Gehäuses 1 ein Aufnahmeraum 17 umschlossen, der zur Aufnahme 20 des einzusetzenden Messgeräts 2 ausgebildet ist. Wie insbesondere in Fig. 2B skizziert, ragt von dem ersten Messgeräteabschnitt 20 ein zweiter Messgeräteabschnitt 21 in unterseitiger Richtung weg, wobei der zweite Messgeräteabschnitt 21 zumindest teilweise einen geringeren Außenumfang als der erste Messgeräteabschnitt 20 aufweist. Dadurch hat der erste Messgeräteabschnitt 20 unterseitig relativ zum zweiten Messgeräteabschnitt 21 vorspringende Abschnitte bzw. Vorsprünge. Gemäß einer besonders bevorzugten Ausführungsform des Messgeräts 2 weist dieses außerdem in seitlicher Richtung einen Anschlussabschnitt 22 auf, welcher zum Einführen eines Anschlusselements 23, insbesondere eines Kabels in seitlicher Richtung vom ersten Messgeräteabschnitt 20 führt. Entsprechend sollen vorzugsweise von der Schutzhaube der erste Messgeräteabschnitt 20 und auch der Anschlussabschnitt 22 überdeckt und seitlich umgeben werden. Hingegen soll im montierten Zustand der zweite Messgeräteabschnitt 21, welcher zu einem Sensorabschnitt mit Sensoren führt, aus der bodenseitigen Durchführungsöffnung 12 herausführen.

Um eine möglichst große Vielzahl von Messgeräten 2 durch diese Schutzhaube schützen zu können, ist der Aufnahmeraum 17 möglichst groß dimensioniert. Damit auch Messgeräte 2 mit einem kleiner als dem Aufnahmeraum 17 dimensionierten ersten Messgeräteabschnitt 20 sicher in dem Gehäuse 1 aufgenommen werden können, sind entsprechende Arretierungsmittel innenseitig des Aufnahmeraums 17 ausgebildet.

An oder vorzugsweise nicht zu weit beabstandet von der bodenseitigen Durchführungsöffnung 12 ragen von der Innenseite 16 der seitlichen Umfangswandung 10 als erste Arretierungselemente untergreifende Stützelemente in den Aufnahmeraum 17 hinein. Die untergreifenden Stützelemente bestehen vorzugsweise aus einem eigentlichen Abstützelement 18 und einem Befestigungselement 19, welches die Abstützelemente 18 mit der seitlichen Umfangswandung 10 verbinden. Prinzipiell können aber auch einteilige Abstützelemente vorgesehen werden, welche direkt von der seitlichen Umfangswandung 10 aus in den Aufnahmeraum 17 hineinragen.

Vorzugsweise sind die Abstützelemente 18 mit einer flächigen Oberfläche ausgebildet, welche den oberseitigen Wandungen 11 zugewandt sind. Eine Ausgestaltung aus einem elastischen Material ermöglicht nach dem Aufsetzen der vorspringenden Abschnitte bzw. Vorsprünge des ersten Messgeräteabschnitts 20 eine elastische Lagerung des ersten Messgeräteabschnitts 20 auf den Abstützelementen 18.

Zur Montage werden die beiden Gehäuseabschnitte 1a, 1b auseinandergeschwenkt, um den ersten Messgeräteabschnitt 20 auf entsprechend einem oder mehreren der untergreifenden Stützelemente, das heißt Abstützelemente 18 und Befestigungselemente 19 aufzusetzen, wobei diese derart im Aufnahmeraum 17 angeordnet sind, dass der zweite Messgeräteabschnitt 21 an ihnen vorbeigeführt aus der Durchgangsöffnung 12 heraustreten kann. Nachfolgend wird der zweite Gehäuseabschnitt 1b gegen den ersten Gehäuseabschnitt 1a geschwenkt, um das Gehäuse 1 zu schließen. Dabei werden in dem zweiten Gehäuseabschnitt 1b befindliche solcher untergreifenden Stützelemente, das heißt Abstützelemente 18 und Befestigungselemente 19, ebenfalls unter entsprechend angeordnete seitliche Vorsprünge des ersten Messgeräteabschnitts 20 gesetzt. Dadurch ist nach dem Schließen des Gehäuses 1 der erste Messgeräteabschnitt 20 in Richtung der Längsachse z fest in dem Gehäuse 1 aufgenommen und kann nicht wie der zweite Messgeräteabschnitte 21 durch die bodenseitige Durchführungsöffnung 12 heraustreten.

Optional können die untergreifenden Stützelemente, insbesondere deren elastische Befestigungselemente 19 auch in einer Richtung der Längsachse z und/oder in einer seitlichen Richtung, das heißt in einer Ebene senkrecht zur Längsachse z elastisch verstellt werden. Insbesondere eine seitliche Biegung der Befestigungselemente 19 in dem heranzuschwenkenden zweiten Gehäuseabschnitt 1b bietet den Vorteil, dass diese bei einem relativ groß dimensionierten zweiten Messgeräteabschnitt 21 zwar gegebenenfalls seitlich gegen dessen Umfangswand gedrückt werden, jedoch aufgrund ihrer Nachgiebigkeit ein vollständiges Schließen des Gehäuses 1 bzw. Heranschwenken des zweiten Gehäuseabschnitts 1b an den ersten Gehäuseabschnitt 1a nicht verhindern. Eine eventuelle Elastizität in Richtung der Längsachse z kann ausgenutzt werden, um den ersten Messgeräteabschnitt 20 in Richtung der oberseitigen Wandungen 11 elastisch einzuspannen.

Um den ersten Messgeräteabschnitt 20 innerhalb des Aufnahmeraums 17 möglichst verstellfest relativ zum Gehäuse 1 festzulegen, ragen vorzugsweise eines oder mehrere Ausrichteelemente 26, 27, 28 von den seitlichen Umfangswandungen 10 oder den oberseitigen Wandungen 11 in den Aufnahmeraum 17 hinein. Die Elastizität solcher Ausrichteelemente 26 - 28 ist dabei so gewählt, dass ein sehr groß dimensionierter Messgeräteabschnitt 20 diese beim Schließen des Gehäuses 1 vorzugsweise bis ganz an die Wandungen drücken oder gegebenenfalls sogar selber zusammendrücken kann, andererseits ein klein dimensionierter Messgeräteabschnitt 20 mit ausreichender Spannkraft möglichst verstellfest zur Innenseite 16 der seitlichen Umfangswandungen 10 gehalten wird.

Besonders vorteilhaft ist dabei ein erstes Ausrichteelement 26, welches sich quer zur Einsetzrichtung des ersten Messgeräteabschnitts 20, das heißt mit einer Erstreckungskomponente parallel zur Längsachse z in den Aufnahmeraum 17 erstreckt. Ein solches Ausrichteelement 26 führt dazu, dass der erste Messgeräteabschnitt 20 bereits beim Einsetzen gegen eine gegenüberliegende Wandung des zweiten Gehäuseabschnitts 1b gespannt wird und somit in Verschwenkungsrichtung v verstellfest im Aufnahmeraum 17 gehalten wird. Vorzugsweise werden aber eines oder mehrere weitere derartige Ausrichteelemente 28 von der seitlichen Umfangswandung 10 oder vorzugsweise der oberseitigen Wandung 11 so in den Aufnahmeraum 17 geführt, dass diese auch eine Fixierung des eingesetzten Messgeräteabschnitts 20 in einer Verstellrichtung quer und seitlich zur Verschwenkungsrichtung v ermöglichen. Außerdem können oberseitige der Ausrichteelemente 27 als elastische Widerlager zu den untergreifenden Stützelementen bzw. Abstützelementen 18 ausgebildet sein und so einen eingesetzten Messgeräteabschnitt 20 auch in Richtung der Längsachse z fixieren.

Bei Ausgestaltungen von Schutzhauben, welche für einen Einsatz an Messgeräten vorgesehen werden, welche nur bedingt durch seitliche Immissionen beeinträchtigt werden, werden vorzugsweise in der seitlichen Umfangswandung 10 eine oder mehrere Lüftungsöffnungen 29 ausgebildet. Diese befinden sich zweckmäßigerweise vor allem im oberseitigen Abschnitt der seitlichen Umfangswandung 10, so dass in dem Aufnahmeraum 17 entstehende Wärme durch die Lüftungsöffnungen 29 austreten kann.

Besonders bevorzugt wird dabei eine Ausgestaltung, bei welcher die entsprechende seitliche Umfangswandung 10 vorspringende Wandungsabschnitte 30 und zurückspringende Wandungsabschnitte 31 aufweist, so dass die Lüftungsöffnungen 29 bei einer Anordnung im Bereich der zurückspringenden Wandungsabschnitte 31 von einem in Art eines Vordaches übergreifenden Abschnitt der oberseitigen Wandung 11 bedingt vor Immissionen aus Richtung der Oberseite geschützt sind.

Bei der dargestellten Ausführungsform ist die seitliche Umfangswandung 10 des ersten Gehäuseabschnitts 1a wellenförmig strukturiert. Jedoch können auch andere Strukturierungen, gegebenenfalls auch mit Kanten ausgebildete kanalförmige Strukturen in achsparalleler Richtung zur Längsachse z in der seitlichen Umfangswandung 10 ausgebildet sein, um zurückspringende Wandungsabschnitte auszubilden.

Um Anschlusselemente 23, insbesondere Kabel vom ersten Messgeräteabschnitt 20 oder, wie skizziert, vom Anschlussabschnitt 22 in seitlicher Richtung nach außen führen zu können, ist in vorzugsweise dem zweiten Gehäuseabschnitt 1b eine seitliche Anschlussöffnung 32 ausgebildet. Die Anschlussöffnung 32 ist dabei vorteilhafterweise in bodenseitiger Richtung geöffnet, so dass beim Verschwenken des zweiten Gehäuseabschnitts 1b um die Verschwenkungsachse x die Anschlussöffnung 32 einfach über das seitlich herausstehende Anschlusselement 23 geschwenkt werden kann. Die Anschlussöffnung 32 ist somit in der seitlichen Umfangswand 10 vorzugsweise in einer Richtung y senkrecht zur Ebene der Verschwenkungsachse x und der Längsachse z angeordnet. Bei einer Ausgestaltung für ein Messgerät mit einem solchen Anschlussabschnitt 22 ist die eigentliche Anschlussöffnung 32 vorzugsweise in seitlicher Richtung nach außen verlagert durch Ausbildung einer von der seitlichen Umfangswandung 10 seitlich nach außen abstehenden Anschlussöffnungswand 33. Im Falle der Gefahr von seitlicher Immission kann eine solche Anschlussöffnungswand 33 sich auch über die Länge möglicher Anschlussabschnitte 22 hinaus erstrecken, um eine Art überragendes Vordach auszubilden.

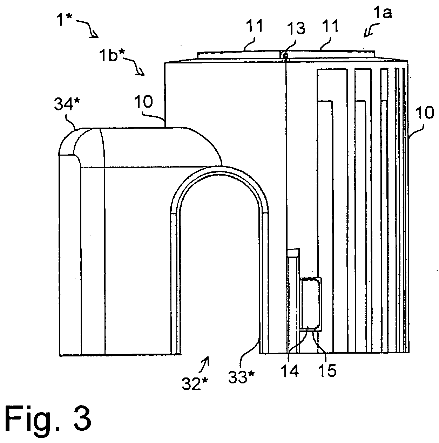

Fig. 3 zeigt eine alternative Ausführungsform einer derartigen Schutzhaube. Im Gegensatz zur Ausführungsform gemäß Fig. 1 weist das Gehäuse 1* jedoch eine modifizierte Gestaltung des zweiten Gehäuseabschnitts 1b* auf. Soweit gleiche Bezugszeichen wie bei der vorstehenden Ausführungsform verwendet werden, handelt es sich um gleiche oder gleich wirkende Komponenten, weshalb diesbezüglich auf die vorstehende Beschreibung verwiesen wird. Mit einem "*" gekennzeichnete Bezugszeichen beziehen sich auf Komponenten, welche gegenüber der ersten Ausführungsform modifiziert sind.

Bei dieser alternativen Ausführungsform weist der zweite Gehäuseabschnitt 1b* einen in seitlicher Richtung davon vorstehenden und im Wesentlichen nach oben und zu den seitlichen Seiten quer zur Längsachse z geschlossenen Raum auf, welcher zur allseitigen umschließenden Aufnahme des Anschlussabschnitts des Messgerätes ausgebildet ist. Bei der skizzierten Ausführungsform wird von einem Anschlussabschnitt ausgegangen, bei welchem das Anschlusselement nicht in verlängerter Richtung aus Sicht des ersten Messgeräteabschnitts über den Anschlussabschnitt hinaus außenseitiger Richtung aus dem Gehäuse 1* geführt wird, sonder bei dem in einer zu dem Anschlussabschnitt seitlichen Richtung aus dem Gehäuse 1* herausgeführt wird. Entsprechend ist eine Anschlussöffnung 32* mit einer diese vorzugsweise umgebenden Anschlussöffnungswand 33* in einer Richtung seitlich zu dem Aufnahmeraum 34* für den Anschlussabschnitt ausgebildet. Prinzipiell kann somit eine derartige Anschlussöffnung je nach Ausgestaltung an einer beliebigen Stelle der seitlichen Umfangswandungen 10 ausgebildet sein. Gegebenenfalls wird in einem solchen Fall bei der Montage der erste Messgeräteabschnitt zusammen mit dem Anschlussabschnitt in den zweiten Gehäuseabschnitt auf dessen untergreifende Stützelemente aufgesetzt, um dann den ersten Gehäuseabschnitt 1a gegen den zweiten Gehäuseabschnitt 1b zu schwenken, so dass das Anschlusselement bereits beim ersten Schritt durch die Anschlussöffnung 32* geführt werden kann.

## Patentansprüche

1. Schutzhaube aufweisend ein Gehäuse (1) zum Schützen eines Messgerätes (2), wobei das Gehäuse (1) aufweist
- einen Aufnahmeraum (17) zum Aufnehmen eines ersten Messgeräteabschnitts (20) des Messgerätes (2),
- eine Durchführungsöffnung (12) zum Hindurchführen eines mit dem ersten Messgeräteabschnitt (20) verbundenen zweiten Messgeräteabschnitts (21),
- zumindest ein untergreifendes Stützelement (18, 19), welches in den Aufnahmeraum (17) hineinragt zum teilweisen Untergreifen des ersten Messgeräteabschnitts (20) in Richtung der Durchführungsöffnung (12),
und das Gehäuse (1) aus zumindest einem ersten und einem zweiten Gehäuseabschnitt (1a, 1b) und zumindest einem Kopplungselement (13; 14, 15) ausgebildet ist, welches den ersten Gehäuseabschnitt (1a) mit dem zweiten Gehäuseabschnitt (1b) verbindet,
wobei die Gehäuseabschnitte (1a, 1b) den Aufnahmeraum (17) so ausbilden, dass der erste Messgeräteabschnitt (20) zwischen den Gehäuseabschnitten (1a, 1b) in den Aufnahmeraum (17) einsetzbar ist und die Gehäuseabschnitte (1a, 1b) nachfolgend zum Verriegeln oder Verschließen des Aufnahmeraums (17) zueinander verstellbar ausgestaltet sind, **dadurch gekennzeichnet, dass**
zumindest ein solches untergreifendes Stützelement (18, 19) derart elastisch ausgebildet ist, dass, wenn der erste Messgeräteabschnitt (20) in dem Aufnahmeraum (17) aufgenommen ist, der erste Messgeräteabschnitt (20) in Richtung einer der Durchführungsöffnung (12) gegenüberliegenden oberseitigen Wandung (11) elastisch gespannt wird, wobei das zumindest eine untergreifende Stützelement (18, 19) derart dimensioniert ist, dass der erste Messgeräteabschnitt (20) in Richtung der Durchführungsöffnung (12) gegen ein Heraustreten aus der Durchführungsöffnung (12) gesperrt wird, wobei zumindest ein elastisches Ausrichteelement (26, 27, 28), welches elastisch gegen den ersten Messgeräteabschnitt (20) gespannt wird beim Setzen des zweiten Gehäuseabschnitts (1a, 1b) an den ersten Gehäuseabschnitt (1a) zum elastischen Einspannen des aufgenommenen ersten Messgeräteabschnitts (20) in den Aufnahmeraum, von zumindest einer seitlichen Umfangswandung (10) des ersten und/oder des zweiten Gehäuseabschnitts (1a, 1b) und/oder von einer der Durchführungsöffnung (12) gegenüberliegenden oberseitigen Wandung (11) so in den Aufnahmeraum (17) hineinragt, dass, wenn der erste Messgeräteabschnitt (20) in dem Aufnahmeraum (17) aufgenommen ist, dieser Messgeräteabschnitt (20) innerhalb des Aufnahmeraums (17) verstellfest relativ zu dem Gehäuse (1) festgelegt ist.

2. Schutzhaube nach Anspruch 1, bei der zumindest ein solches Kopplungselement als ein den ersten und den zweiten Gehäuseabschnitt (1a, 1b) gelenkig miteinander verbindendes Gelenk (13) ausgebildet ist.

3. Schutzhaube nach Anspruch 2, bei der in zumindest einer seitlichen Umfangswandung (10) des ersten und/oder des zweiten Gehäuseabschnitts (1a, 1b) eine seitlich und unterseitig offene Anschlussöffnung (32) zum Durchführen von elektrisch leitfähigen Anschlusselementen (23) des Messgeräts (2) ausgebildet ist, wobei die Anschlussöffnung (32) unter einem Winkel in einer Ebene senkrecht zu einer Verschwenkungsachse (x) des Gelenks (13) geöffnet angeordnet ist.

4. Schutzhaube nach einem vorstehenden Anspruch, bei der zumindest ein solches Kopplungselement als ein Rastelementpaar (14, 15) ausgebildet ist zum Arretieren des ersten und des zweiten Gehäuseabschnitts (1a, 1b) aneinander in einer den ersten Messgeräteabschnitt (20) umschließenden Anordnung.

5. Schutzhaube nach einem vorstehenden Anspruch, bei der in der bzw. einer seitlichen Umfangswandung (10) des ersten und/oder des zweiten Gehäuseabschnitts (1a, 1b) zurückspringende Wandungsabschnitte (31) ausgebildet sind, wobei die seitliche Umfangswandung (10) im Montagezustand bei Betrieb des Messgerätes (2) die bzw. eine der Durchführungsöffnung (12) gegenüberliegende oberseitige Wandung (11) in Richtung der unterseitigen Durchgangsöffnung (12) verbindet.

6. Schutzhaube nach Anspruch 5, bei der in zumindest einem solchen aus außenseitiger Sicht in den Aufnahmeraum hinein zurückspringenden Wandungsabschnitt (30) eine Lüftungsöffnung (29) zum Belüften des Aufnahmeraums (17) ausgebildet ist.

7. Schutzhaube nach einem vorstehenden Anspruch,
**dadurch gekennzeichnet, dass** die Durchführungsöffnung (12) größer als der aufgenommene erste Messgeräteabschnitt (20) ist.

8. Schutzhaube nach einem vorstehenden Anspruch,
**dadurch gekennzeichnet, dass** die Durchgangsöffnung (12) so ausgebildet ist, dass, wenn der erste Messgeräteabschnitt (20) in der Aufnahme (17) aufgenommen ist, der zweite Messgeräteabschnitt (21) des Messgeräts (2) durch die Durchführungsöffnung (12) hindurchtreten kann.

9. Verfahren zum Montieren einer Schutzhaube um einen ersten Messgeräteabschnitt (20) eines Messgeräts (2), insbesondere zum Montieren einer Schutzhaube nach einem vorstehenden Anspruch, bei dem
- in einen Aufnahmeraum (17) eines Gehäuses (1) der Schutzhaube ein erster Messgeräteabschnitt (20) eines solchen Messgerätes (2) derart eingesetzt wird, dass ein zweiter Messgeräteabschnitt (21) durch eine Durchführungsöffnung (12) aus dem Gehäuse (1) herausführt,
- der erste Messgeräteabschnitt (20) auf zumindest ein in den Aufnahmeraum (17) hineinragendes und den ersten Messgeräteabschnitt (20) untergreifendes Stützelement (18, 19) gesetzt wird und
- nachfolgend zumindest ein zweiter Gehäuseabschnitt (1b) derart gegen den ersten Messgeräteabschnitt (20) gesetzt und an dem ersten Gehäuseabschnitt (1a) arretiert wird, dass von diesen der Aufnahmeraum mit dem eingesetzten ersten Messgeräteabschnitt (20) umschlossen wird,
**dadurch gekennzeichnet, dass**
- zumindest ein elastisches Ausrichteelement (26 - 28) von zumindest einer seitlichen Umfangswandung (10) des ersten und/oder des zweiten Gehäuseabschnitts (1a, 1b) und/oder von der bzw. einer der Durchführungsöffnung (12) gegenüberliegenden oberseitigen Wandung (11) in den Aufnahmeraum (17) hineinragt,
- zumindest ein untergreifendes Stützelement (18, 19) derart elastisch ausgebildet wird, dass, wenn der erste Messgeräteabschnitt (20) in dem Aufnahmeraum (17) aufgenommen ist, der erste Messgeräteabschnitt (20) in Richtung einer der Durchführungsöffnung (12) gegenüberliegenden oberseitigen Wandung (11) elastisch gespannt wird, wobei das zumindest eine untergreifende Stützelement (18, 19) derart dimensioniert ist, dass der erste Messgeräteabschnitt (20) in Richtung der Durchführungsöffnung (12) gegen ein Heraustreten aus der Durchführungsöffnung (12) gesperrt wird, und
- das zumindest eine elastische Ausrichteelement (26 - 28) elastisch gegen den ersten Messgeräteabschnitt (20) gespannt wird beim Setzen des zweiten Gehäuseabschnitts (1a, 1b) an den ersten Gehäuseabschnitt (1a) zum elastischen Einspannen des aufgenommenen ersten Messgeräteabschnitts (20) in dem Aufnahmeraum (17).

## Claims

1. Protective cover having a housing (1) for protecting a measuring device (2), wherein the housing (1) has
- a receiving space (17) for receiving a first measuring device section (20) of the measuring device (2),
- a lead-through opening (12) for inserting a second measuring device (21) joined to the first measuring device (20)
- at least one support element (18, 19) reaching under, which extends into the receiving space (17) to partially reach under the first measuring device (20) in the direction of the lead-through opening (12),
and the housing (1) is formed of at least a first and a second housing section (1a, 1b) and at least one coupling element (13; 14, 15) which connects the first housing section (1a) to the second housing section (1b),
wherein the housing sections (1a, 1b) form the receiving space (17) in such a way that the first measuring device section (20) is able to be inserted into the receiving space (17) between the housing sections (1a, 1b) and the housing sections (1a, 1b) are subsequently formed to be adjustable to one another to lock or seal the receiving space (17), **characterised in that**
at least one such support element (18, 19) reaching under is formed elastically in such a way that, when the first measuring device section (20) is received in the receiving space (17), the first measuring device section (20) is elastically tensioned in the direction of an upper side wall (11) opposite the lead-through opening (12), wherein the at least one support element (18, 19) reaching under is dimensioned in such a way that the first measuring device section (20) is blocked from emerging out of the lead-through opening (12) in the direction of the lead-through opening (12), wherein at least one elastic adjustment element (26, 27, 28), which is elastically tensioned against the first measuring device section (20) by placing the second housing section (1a, 1b) on the first housing section (1a) to elastically clamp the received first measuring device section (20) in the receiving space, extends from at least one side peripheral wall (10) of the first and/or the second housing section (1a, 1b) and/or from an upper side wall (11) opposite the lead-through opening (12) into the receiving space in such a way that, when the first measuring device section (20) is received in the receiving space (17), this measuring device section (20) is fixed rigidly within the receiving space (17) relative to the housing (1).

2. Protective cover according to claim 1, in which the at least one such coupling element is formed as a joint (13) that flexibly joins the first and the second housing section (1a, 1b) together.

3. Protective cover according to claim 2, in which, in at least one side peripheral wall (10) of the first and/or the second housing section (1a, 1b) a connecting opening (32), open on the side and the underside, is formed for allowing electrically conducting connecting elements (23) of the measuring device (2) to pass through, wherein the connecting opening (32) is arranged open below an angle in a plane perpendicular to a pivoting axis (x) of the joint.

4. Protective cover according to one of the preceding claims, in which at least one such coupling element is formed as a latching element pair (14, 15) for locking the first and the second housing sections (1a, 1b) to each other in an arrangement surrounding the first measuring device section (20).

5. Protective cover according to one of the preceding claims, in which recoiling wall sections (31) are formed in the or a side peripheral wall (10) of the first and/or the second housing section (1a, 1b), wherein the side peripheral wall (10), in the assembled state during activation of the measuring device (2), joins the or an upper side wall (11) opposite the lead-through opening (12) in the direction of the underside lead-through opening (12).

6. Protective cover according to claim 5, in which a ventilation opening (29) for ventilating the receiving space (17) is formed in at least one such wall section (30) that recoils into the receiving space when seen from the outside.

7. Protective cover according to one of the preceding claims,
**characterised in that**
the lead-through opening (12) is larger than the received first measuring device section (20).

8. Protective cover according to one of the preceding claims,
**characterised in that**
the lead-through opening (12) is formed in such a way that, when the first measuring device section (20) is received in the receiving space (17), the second measuring device section (21) of the measuring device (2) can pass through.

9. Method for assembling a protective cover around a first measuring device section (20) of a measuring device (2), in particular for assembling a protective cover according to one of the preceding claims, in which
- a first measuring device section (20) of one such measuring device (2) is inserted into a receiving space (17) of a housing of the protective cover in such a way that a second measuring device section (21) passes out of the housing (1) through a lead-through opening (12),
- the first measuring device section (20) is placed on at least one support element (18, 19) extending into the receiving space (17) and reaching under the first measuring device section (20) and
- subsequently, at least one second housing section (1b) is placed against the first measuring device section (20) and blocked at the first housing section (1a) in such a way that the receiving space with the inserted first measuring device section (20) is sealed by them,
**characterised in that**
- at least one elastic adjustment element (26-28) extends into the receiving space (17) from at least one side peripheral wall (10) of the first and/or the second housing section (1a, 1b) and/or from the or an upper side wall (11) opposite the lead-though opening (12),
- at least one support element (18, 19) reaching under is formed elastically in such a way that, when the first measuring device section (20) is received in the receiving space (17), the first measuring device section (20) is tensioned elastically in the direction of an upper side wall (11) opposite the lead-through opening (12), wherein the at least one support element (18, 19) reaching under is dimensioned in such a way that the first measuring device section (20) is blocked from emerging out of the lead-through opening (12) in the direction of the lead-through opening (12), and
- the at least one elastic adjustment element (26-28) is tensioned against the first measuring device section (20) by placing the second housing section (1a, 1b) on the first housing section (1a) to elastically clamp the received first measuring device section (20) in the receiving space (17).

## Revendications

1. Capot de protection comprenant un boîtier (1) pour permettre la protection d'un appareil de mesure (2), ce boîtier (1) comprenant :
- un volume de réception (17) destiné à recevoir un premier segment (20) de l'appareil de mesure (2),
- une ouverture de passage (12) destinée à permettre le passage d'un second segment (21) de l'appareil de mesure relié au premier segment (20) de l'appareil de mesure,
- au moins un élément support (18, 19) s'engagent par en dessous qui pénètre dans le volume de réception (17) pour s'engager partiellement au-dessous du premier segment (20) de l'appareil de mesure dans la direction de l'ouverture de passage (12),
- le boîtier (1) étant réalisé à partir d'au moins un premier et un second segments de boîtier (1a, 1b) et d'au moins un élément d'accouplement (13, 14, 15) qui relie le premier segment de boîtier (1a) avec le second segment de boîtier (1b),
- les segments de boîtier (1a, 1b) formant le volume de réception (17) de sorte que le premier segment de l'appareil de mesure (20) puisse être introduit dans le volume de réception (17) entre les segments de boîtier (1a, 1b) et que les segments de boîtier (1a, 1b) puissent ensuite être réglés l'un par rapport à l'autre pour permettre de verrouiller ou de fermer le volume de réception (17),
**caractérisé en ce qu'**
au moins un élément support s'engageant par en dessous (18, 19) est réalisé élastiquement de sorte que, lorsque le premier segment de l'appareil de mesure (20) est inséré dans le volume de réception (17), le premier segment (20) de l'appareil de mesure soit rappelé élastiquement en direction de la paroi supérieure (11) opposée à l'ouverture de passage (12), l'élément support (18, 19) s'engageant par en dessous étant dimensionné de sorte que le premier segment (20) de l'appareil de mesure soit bloqué dans la direction de l'ouverture de passage (12) pour empêcher son extraction par cette ouverture de passage (12), au moins un élément d'alignement élastique (26, 27, 28) qui est rappelé élastiquement contre le premier segment (20) de l'appareil de mesure, pénétrant dans le volume de réception (17) lors de la mise en place du second segment de boîtier (1a, 1b) sur le premier segment de boîtier (1a) pour serrer élastiquement le premier segment (20) de l'appareil de mesure reçu dans le volume de réception (17) à partir d'au moins la paroi périphérique (10) du premier et/ou du second segment de boîtier (1a, 1b), et/ou de la paroi supérieure (11) située à l'opposé de l'ouverture de passage (12) de sorte que, lorsque le premier segment (20) de l'appareil de mesure est inséré dans le volume de réception (17), ce segment (20) de l'appareil de mesure soit fixé à la partie interne du volume de réception (17) solidairement par rapport au boîtier (1).

2. Capot de protection conforme à la revendication 1,
dans lequel au moins un élément d'accouplement est réalisé sous la forme d'une articulation (13) reliant de manière articulée le premier et le second segments de boîtier (1a, 1b).

3. Capot de protection conforme à la revendication 2,
dans lequel, dans au moins la paroi périphérique latérale (10) du premier et/ou du second segments de boîtier (1a, 1b) est formée une ouverture de connexion (32) ouverte latéralement vers le bas pour permettre le passage d'éléments de connexion électriquement conducteurs (23) de l'appareil de mesure (2), l'ouverture de connexion (32) s'ouvrent angulairement dans un plan perpendiculaire à l'axe de pivotement (x) de l'articulation (13).

4. Capot de protection conforme à l'une des revendications précédentes,
dans lequel, au moins un élément d'accouplement est réalisé sous la forme d'une paire d'éléments d'encliquetage (14, 15) pour permettre de bloquer l'un sur l'autre le premier et le second segments de boîtier (1a, 1b) selon une configuration entourant le premier segment (20) de l'appareil de mesure.

5. Capot de protection conforme à l'une des revendications précédentes,
dans lequel dans la ou dans une paroi périphérique latérale (10) du premier et/ou du second segment(s) de boîtier (1a, 1b) sont formés des segments de boîtier (31) en retrait de la paroi périphérique latérale (10) reliant à l'état de montage lors du fonctionnement de l'appareil de mesure (2) la ou une paroi supérieure (11) située à l'opposé de l'ouverture de passage (12) en direction de l'ouverture de passage inférieure (12).

6. Capot de protection conforme à la revendication 5,
dans lequel, dans au moins un segment de paroi (30) en retrait dans le volume de réception, selon une vue externe, est réalisée une ouverture d'aération (29) pour permettre l'aération du volume de réception (17).

7. Capot de protection conforme à l'une des revendications précédentes,
**caractérisé en ce que**
l'ouverture de passage (12) est plus grande que le premier segment de l'appareil de mesure (20) inséré dans celle-ci.

8. Capot de protection conforme à l'une des revendications précédentes,
**caractérisé en ce que**
l'ouverture de passage (12) est formée de sorte que, lorsque le premier segment (20) de l'appareil de mesure est inséré dans le logement de réception (17), le second segment (21) de l'appareil de mesure (2) puisse passer au travers de l'ouverture de passage (12).

9. Procédé permettant de monter un capot de protection autour d'un premier segment (20) d'un appareil de mesure (2), en particulier de monter d'un capot de protection conforme à l'une quelconque des revendications précédentes,
selon lequel :
- dans un volume de réception (17) du boîtier (1) du capot de protection est inséré un premier segment (20) de l'appareil de mesure (2) de sorte qu'un second segment (21) de l'appareil de mesure soit extrait du boîtier (1) par une ouverture de passage (12),
- le premier segment (20) de l'appareil de mesure est installé sur au moins un élément support (18, 19) pénétrant dans le volume de réception (17) et s'engageant au-dessous du premier segment (20) de l'appareil de mesure, et
- ensuite au moins un second segment de boîtier (1b) est installé contre le premier segment (20) de l'appareil de mesure et bloqué sur le premier segment (1a) du boîtier de sorte que le volume de réception dans lequel est inséré le premier segment (20) de l'appareil de mesure soit entouré par celui-ci,
**caractérisé en ce que**
- au moins un élément d'alignement élastique (26-28) pénètre dans le volume de réception (17) à partir d'au moins la paroi périphérique latérale (10) du premier et/ou du second segment de boitier (1a, 1b) et/ou d'une ou de la paroi supérieure (11) opposée à l'ouverture de passage (12),
- au moins un élément support (18, 19) s'engageant par en dessous est réalisé élastiquement de sorte que lorsque le premier segment (20) de l'appareil de mesure est inséré dans le volume de réception (17), le premier segment (20) de l'appareil de mesure soit rappelé élastiquement en direction de la paroi supérieure (11) située à l'opposé de l'ouverture de passage (12), l'élément support (18, 19) s'engageant par en dessous étant dimensionné de sorte que le premier segment (20) de l'appareil de mesure soit bloqué en direction de l'ouverture de passage (12) pour empêcher son extraction de cette ouverture de passage (12), et
- l'élément d'alignement élastique (26-28) est rappelé élastiquement contre le premier segment (20) de l'appareil de mesure lors de l'installation du second segment (1a, 1b) du boîtier sur le premier segment (1a) du boîtier pour serrer élastiquement le premier segment (20) de l'appareil de mesure inséré dans le volume de réception (17).
